# EUROPÄISCHE PATENTSCHRIFT

(11) **EP 3 973 174 B1**
(45) Veröffentlichungstag und Bekanntmachung des Hinweises auf die Patenterteilung: **03.07.2024**
(21) Anmeldenummer: 19730100.5
(22) Anmeldetag: 21.05.2019
(51) Int. Cl.: F02N 3/04, F02N 11/00, F02N 15/02

(54) **ELEKTRISCHES STARTERSYSTEM FÜR MOTORRÄDER**
ELECTRIC STARTER SYSTEM FOR MOTORCYCLES
SYSTÈME DE DÉMARREUR ÉLECTRIQUE CONÇU POUR DES MOTOCYCLETTES

(43) Veröffentlichungstag der Anmeldung: 30.03.2022
(73) Patentinhaber: W & W Cycles AG, 97076 Würzburg (DE)
(72) Erfinder: RAJEK, Josef, 6122 Fritzens (AT); UNTERBERGER, Peter, 6122 Fritzens (AT)
(74) Vertreter: Götz, Gudrun Veronika
(86) Internationale Anmeldenummer: PCT/EP2019/063121
(87) Internationale Veröffentlichungsnummer: WO 2020/233800

(56) Entgegenhaltungen:
- WO-A1-85/01322
- DE-U1-202016 104 454
- US-A- 6 109 121
- US-B1- 7 140 339

## Beschreibung

Die Erfindung betrifft ein elektrisches Startersystem für ein Motorrad mit mechanischer Kickstart-Anlassvorrichtung, insbesondere für ein Motorrad der Marke Harley-Davidson mit Viergang-Getriebe, wobei das Motorrad eine Getriebehauptwelle aufweist, die zum Starten des Motorrads und während des Normalbetriebs des Motorrads in einer Anlass- und Antriebsdrehrichtung dreht und die Kickstart-Anlassvorrichtung ein Kickerritzel sowie ein Kickerkupplungsteil aufweist, wobei das Kickerritzel zur axialen Kupplung mit dem Kickerkupplungsteil ausgebildet ist und das Kickerkupplungsteil drehmomentübertragend mit der Getriebehauptwelle verbunden ist, und wobei das elektrische Startersystem einen elektrischen Startermotor mit einem davon antreibbaren Starterwellenritzel umfasst.

Die Erfindung betrifft außerdem einen elektrischen Startersatz zum Nachrüsten eines Motorrads mit mechanischer Kickstart-Anlassvorrichtung, insbesondere eines Motorrads der Marke Harley-Davidson mit Viergang-Getriebe.

Schließlich betrifft die Erfindung ein Motorrad, das mit einem erfindungsgemäßen elektrischen Startersystem oder einem erfindungsgemäßen elektrischen Startersatz ausgerüstet, nachgerüstet oder versehen ist.

Die Erfindung liegt im Gebiet von Motorrädern mit Verbrennungsmotoren, wobei unter dem Begriff Motorrad generell motorisierte Zweiräder, wie z. B: auch Motorroller oder Mopeds, verstanden werden. Im Gegensatz zu bspw. Elektromotoren können Verbrennungsmotoren nicht selbst anlaufen. Zum Starten von Verbrennungsmotoren, ist es daher notwendig, den Motor durch Auslösen von zumindest einem Ansaug- und einem Verdichtungstakt "anzuwerfen", d. h. dessen Kurbelwelle auf die hierzu jeweils erforderliche Mindestdrehzahl zu beschleunigen. Eine Beschleunigung der Kurbelwelle kann über eine als "Anlasser" bezeichnete Vorrichtung erfolgen. Zumeist ist der Anlasser in der Form eines Elektromotors ausgeführt, auch als "E-Starter" bezeichnet, der über einen Startknopf, z. B. am Lenker oder am Elektromotor selbst, betätigt wird und dessen Drehmoment zum Starten des Verbrennungsmotors auf die Kurbelwelle übertragen wird.

Für kleinere Motoren, gerade bei Motorrädern, kommen auch mechanische Anlasser zum Einsatz. Besonders bekannt sind mechanische Anlasser in der Form einer mechanischen Kickstart-Anlassvorrichtung, dem sogenannten "Kickstarter".

Ein Kickstarter ist üblicherweise ein Hebel, bestehend aus einem Kickstartpedal und einer Kickerwelle. Durch den kräftigen Tritt des Fahrers auf das Kickstartpedal wird eine Drehbewegung der Kickerwelle erzeugt, welche auf die Kurbelwelle übertragen wird, um die zum Starten des Verbrennungsmotors notwendige Drehzahl zu erzeugen. Gerade bei Motorrädern der Marke Harley-Davidson sind Motor und Getriebe oftmals in getrennten Gehäusen untergebracht ("Big Twin"). Neben der unmittelbaren Übertragung auf die Kurbelwelle, kann die Drehbewegung daher auch mittelbar, über die Getriebehauptwelle, des Motorradgetriebes übertragen werden. Hierbei wird das manuell an der Kickerwelle erzeugte Drehmoment zunächst auf die Getriebehauptwelle des Motorrads übertragen, von der aus die Drehbewegung über einen sogenannten Primärantrieb mittels Kette oder Riemen dann an die Kurbelwelle des Verbrennungsmotors weitergegeben wird.

Für den Start- oder Anlassvorgang werden die Getriebehauptwelle und folglich auch die Kurbelwelle in einer Anlass- und Antriebsdrehrichtung gedreht. Die Anlass- und Antriebsdrehrichtung entspricht der Drehrichtung in welcher die Kurbelwelle bzw. die Getriebehauptwelle während des Normalbetriebs des Motorrads, d. h. bei laufendem Verbrennungsmotor und/oder beim Vorwärtsfahren dreht. Seltener gibt es auch Motorräder die mit einem Rückwärtsgang ausgestattet sind. Auch beim motorangetriebenen Rückwärtsfahren drehen Kurbelwelle und Getriebehauptwelle in der obigen Anlass- und Antriebsdrehrichtung. Die Änderung der Fahrtrichtung wird erst durch das Getriebe und Schalten in den Rückwärtsgang umgesetzt. Wird das Motorrad hingegen manuell, z.B. durch vom Fahrer aufgebrachte Muskelkraft, rückwärts geschoben, würde bei eingelegtem Vorwärtsgang die Drehung des Hinterrades über die Sekundärkette auf die Getriebehauptwelle übertragen und die Getriebehauptwelle in einer der Anlass- und Antriebsrichtung entgegengesetzten Rücklaufrichtung drehen. Durch Einlegen des Neutralgangs kann eine Drehung der Getriebehauptwelle beim Rückwärtsschieben unmittelbar verhindert werden.

Um nach dem Start- oder Anlassvorgang und/oder beim Normalbetrieb des Motorrads ein "Mitdrehen" des Kickstartpedals zu vermeiden und um eine Rückstellung des Kickstartpedals in dessen Ausgangsposition zu ermöglichen, sind die Kickerwelle und die Getriebehauptwelle über eine Kupplungsverbindung der Kickstart-Anlassvorrichtung, die "Kickerkupplung", lösbar miteinander verbunden. Die Kickerkupplung ist aus einem drehmomentübertragend auf der Getriebehauptwelle sitzenden Kickerkupplungsteil mit axial angeordneter und schrägflächig ausgeführter Querverzahnung (auch als "Kickerratsche" bezeichnet) und einem axial gegenüberliegend angeordneten Kickerritzel mit komplementärer Querverzahnung gebildet. Das Kickerritzel ist, insbesondere über eine Bronzebuchse, drehbar auf der Getriebehauptwelle gelagert und mit einer stirnseitigen Verzahnung zum Eingriff in ein Kickerzahnrad ausgebildet. Das Kickerzahnrad sitzt wiederum drehmomentübertragend, insbesondere kraft- und/oder formschlüssig, auf der Kickerwelle, an welcher, wie zuvor beschrieben das Kickstartpedal angebracht ist. Aufgrund der ineinandergreifenden Querverzahnung zwischen Kickerkupplungsteil und Kickerritzel, die in Antriebsdrehrichtung der Getriebehauptwelle einen Freilauf bildet, lässt sich ein Mitdrehen des Kickstartpedals unmittelbar nach dem Startvorgang verhindern. Während des Normalbetriebs, d. h. bei laufendem Verbrennungsmotor, wird die Kickerkupplung axial voneinander gelöst.

Derlei Kickstarter waren vor der Erfindung des E-Starters notwendig und werden bereits seit Jahrzehnten als Anlasser zum Starten des Verbrennungsmotors eines Motorrads verwendet. Auch heute noch sind sehr viele Motorräder älteren Baujahres, insbesondere Motorräder der Marke Harley Davidson, mit einem Kickstarter ausgestattet.

Aufgrund des erhöhten Komforts besteht Bedarf daran, ältere, mit einer Kickstart-Anlassvorrichtung ausgerüstete Motorräder mit einem elektrischen Startersystem nachzurüsten. Gleichzeitig wird in Fachkreisen Wert darauf gelegt, die volle Funktionsfähigkeit des Original-Kickstarters bei der Nachrüstung mit einem elektrischen Anlasser zu erhalten und möglichst wenige Original-Komponenten oder Originalbauteile des Motorrads auszutauschen oder zu verändern.

Aus dem Stand der Technik, z. B. aus der DE 20 2016 104 454 U1 ist ein elektrisches Startersystem zum Nachrüsten bei Motorrädern der Marke Harley-Davidson mit Kickstarter bekannt. Um den beim Originalmotorrad zur Verfügung stehenden Bauraum effizient auszunutzen, werden überwiegend auf der in Fahrtrichtung linken Seite des Motorrads, verschiedene Modifikationen für den Einbau des elektrischen Startersystems vorgenommen. Die Funktion des Original-Kickstarters, dessen Drehmoment üblicherweise auf der rechten Motorradseite über die Kickerkupplung an die Getriebehauptwelle abgegeben wird, bleibt erhalten. Auf der linken Motorradseite erfolgt eine Drehmomentübertragung des Elektromotors auf die Getriebehauptwelle durch Modifikation der Kupplungsnabe. Diese wird u. a. mit einem zusätzlichen Starterzahnkranz verschweißt, an dem beim Startvorgang das Starterwellenritzel des Elektromotors in Eingriff kommt. Um den erforderlichen Bauraum für den Starterzahnkranz zu schaffen, muss die gesamte Kupplung des Motorrads an der Getriebehauptwelle in Fahrtrichtung nach links versetzt werden. Dies hat zur Folge, dass zur fluchtenden Ausrichtung entsprechend auch das Abtriebsritzel des Verbrennungsmotors selbst nach links versetzt werden muss. Als weitere Modifikationen sind der Einbau eines zusätzlichen Kettenspanners sowie die Anpassung des Original-Öltanks erforderlich.

Das Dokument US 7 140 339 B1 (nachfolgende Bezugsziffern aus Zeichnungen dieses Dokuments) beschäftigt sich mit einem Kickstarter-Modifizierungskit 10 (nachfolgende Bezugsziffern aus Zeichnungen dieses Dokuments), welches, gerade umgekehrt als in der vorliegenden Anmeldung, zur Nachrüstung von über einen Handknopf elektrisch gestarteten Motorrädern mit einem Kickstartpedal 41 vorgesehen ist. Der klassische Kickstartvorgang soll mittels der nachgerüsteten Kickstartanordnung 40 und dem Kickstartpedal 41 simuliert werden. Über eine rotierende Welle 30 lässt sich mittels des Kickstartpedals 41 ein Exzenter 50 aus einer Ruheposition in eine Stellposition überführen. In dieser Position greift ein Betätigungsnocken 52 des Exzenters 50 in einen Stellhebel 71 einer Schalteranordnung 70 ein, um den Starter-Schaltkreis zu schließen und das Motorrad mittels dessen elektrischen Startermotors zu starten. Nach alledem lässt sich das in US 7 140 339 B1 offenbarte Kit nicht als elektrisches Startersystem einstufen, welches zum Nachrüsten eines Motorrads mit mechanischer Kickstart-Anlassvorrichtung geeignet wäre. Darüber hinaus besteht auch keine drehmomentübertragende Kopplung zwischen der Kickstartanordnung 40 und der Getriebehauptwelle des Motorrads. Vielmehr dient der Exzenter 50 der Kickstartanordnung 40 lediglich zum Schließen des Starter-Schaltkreises, wodurch der elektrische Starter aktiviert wird (s. insbesondere Figuren 7 und 8 in US 7 140 339 B1).

Das Dokument US 6 109 121 A (nachfolgende Bezugsziffern aus Zeichnungen dieses Dokuments) . Offenbart ein elektrisches Startersystem, das zum Nachrüsten von und zur Verwendung mit Motorrädern vorgesehen ist, die ausschließlich über ein Kickstartsystem gestartet werden. Das Startersystem umfasst einen elektrisch angetriebenen Starter 10 zum Ausfahren, Einfahren und Rotieren einer Starterwelle 14 mitsamt dem daran befestigten Antriebszahnrad 15. Das Antriebszahnrad 15 wiederum ist mit einer Außenverzahnung 16 versehen, die durch Ausfahren der Starterwelle 14 in Eingriff mit einer Zahnreihe 31 eines kreissegmentförmigen Kicker-Getriebeelements 30 gebracht wird (Spalte 2, Zeile 64 - Spalte 3, Zeile15). Das Kicker-Getriebeelement 30 ist mit der Getriebewelle 33 fest verbunden, sodass das über einen elektrischen Motor 18 rotierte Antriebszahnrad 15 zu einer hebelartigen Auslenkung des kreissegmentförmigen Kicker-Getriebeelements 30 führt, wodurch wiederum die Getriebewelle 33 um etwa 90° in Anlassrichtung rotiert wird (s. Figur 3 in US 6 109 121 A). Die Getriebewelle 33 ist rotationsübertragend mit der aus dem Kurbelwellengehäuse 20 herausragenden Motorrad-Kickerwelle 21 verbunden, weshalb Letztere durch den elektrisch angetriebenen Starter 10 zum Starten des Motorrad-Motors in Anlassrichtung rotiert werden kann. Durch axiales Einfahren der Starterwelle 14 kann der Eingriff zwischen der Außenverzahnung 16 des Antriebszahnrads 15 und der Zahnreihe 31 gelöst werden. Die am Kurbelwellengehäuse 20 montierte Feder 23 schwenkt das Kicker-Getriebeelement 30 dann in seine Ausgangsposition zurück. Abweichend vom Gegenstand der vorliegenden Anmeldung ist das Kicker-Getriebeelement 30 nämlich nicht von einem Starterzahnkranz umgeben, sondern weist lediglich eine Zahnreihe 31 am äußeren Umfang auf.

Das Dokument WO 85/01 322A1 (nachfolgende Bezugsziffern aus Zeichnungen dieses Dokuments) beschreibt einen Anlasser für einen Verbrennungsmotor. Es ist ein erster Anlassermechanismus mit einem selbststartenden Motor 13 und ein zweiter Anlassermechanismus mit einem Kickhebel 18 vorgesehen. Mit letzterem wird eine Kurbelwelle 1 in Drehung versetzt, welche durch den ersten Anlassermechanismus kontinuierlich fortgeführt wird. Ferner ist ein Starterzahnkranz vorgesehen, welcher ein Kickerkupplungsteil koaxial umgibt.

Es ist die Aufgabe der vorliegenden Erfindung, elektrische Startersysteme für Motorräder zu verbessern, insbesondere deren Einbau bzw. Nachrüstung bei einem Motorrad mit Kickstart-Anlassvorrichtung mit weniger Modifikationen der Originalbauteile, geringerem Zeitaufwand und/oder einfacher bzw. schneller durchführen zu können.

Die Aufgabe wird gelöst durch ein elektrisches Startersystem gemäß Anspruch 1, einen elektrischen Startersatz gemäß Anspruch 10 und ein Motorrad gemäß Anspruch 15.

Ein erfindungsgemäßes Startersystem der eingangs beschriebenen Art kennzeichnet sich dadurch, dass ein Drehmoment des elektrischen Startermotors über ein zwischengeschaltetes Startergetriebe, von dem Starterwellenritzel, vorzugsweise stirnseitig, an das Kickerkupplungsteil übertragbar ist.

Gemäß der Erfindung ist also vorgesehen, das zum Starten des Verbrennungsmotors erforderliche Drehmoment mit einem elektrischen Startermotor bereitzustellen und über das Kickerkupplungsteil der mechanischen Kickstart-Anlassvorrichtung an die Getriebehauptwelle zu übertragen. Dies erweist sich als besonders günstig, weil das Kickerkupplungsteil als Bestandteil der Kickstart-Anlassvorrichtung ohnehin zur Übertragung des Drehmoments vom Kickstarter auf die Getriebehauptwelle fest bzw. drehmomentübertragend mit dieser verbunden ist.

Indem die bereits in der Originalausführung des Motorrads vorgesehene drehmomentübertragende Verbindung zur Getriebehauptwelle auch zur Übertragung des von dem elektrischen Startermotor aufgebrachten Drehmoments genutzt wird, lässt sich die Anzahl an vorzunehmenden Modifikationen der Originalbauteile und/oder die Anzahl an auszutauschenden Original-Komponenten minimieren. Insbesondere ist es nicht notwendig zusätzliche Bauteile, wie Zahnräder oder Zahnkränze mit der Getriebehauptwelle zu verbinden. Die vorzunehmenden Umbauten bzw. Modifikationen werden erfindungsgemäß ausschließlich auf der Seite des Motorrads vorgenommen, auf welcher die mechanische Kickstart-Anlassvorrichtung verbaut ist. Üblicherweise handelt es sich hierbei um die in Fahrtrichtung des Motorrads rechte Seite. Aus diesem Grund kann bspw. ein Versatz der Kupplung des Motorrads vermieden werden, wodurch ansonsten erforderliche Umbauten wie der Einbau eines Kettenspanners und/oder Modifikationen am Abtriebsritzel des Verbrennungsmotors entfallen. Vorzugsweise sind Modifikationen der Originalbauteile des Motorrads ausschließlich an den Komponenten der mechanischen Kickstart-Anlassvorrichtung notwendig. Dies ist besonders vorteilhaft, da ein Umbau der Kickstart-Anlassvorrichtung wesentlich einfacher und unkomplizierter zu realisieren ist als bspw. Änderungen der Kupplung bzw. des Kupplungskorbs und/oder des Primärantriebs. Indem das elektrische Startersystem am Kickerkupplungsteil selbst angreift bzw. drehmomentübertragend auf dieses einwirkt, kann das erfindungsgemäße elektrische Startersystem in einer kompakteren Bauweise ausgeführt sein und/oder der elektrische Startermotor kleiner gewählt werden.

In der Folge lässt sich ein erfindungsgemäßes elektrisches Startersystem mit besonders wenig optisch wahrnehmbaren, baulichen Veränderungen, in die mechanische Kickstart-Anlassvorrichtung integrieren, wodurch das Erscheinungsbild des Motorrads nahezu unverändert verbleibt. Gerade für Besitzer von alten Harley-Davidson Motorrädern, die in Fachkreisen auch als Sammel-Objekte gehandelt werden, kann so ein optimaler Kompromiss zwischen Fahrkomfort und dem nahezu vollständigen Erhalt der Originalbauteile, deren Funktionalität und dem optischen Erscheinungsbild erreicht werden. Das erfindungsgemäße elektrische Startersystem eignet sich besonders vorteilhaft als Starthilfe für Viergang Big Twin Harley-Davidson Motorräder.

Ein weiteres Erfindungsmerkmal besteht darin, dass das elektrische Startersystem einen Starterzahnkranz aufweist, der das Kickerkupplungsteil koaxial zum drehmomentübertragenden Eingriff mit einem Starterzahnrad des Startergetriebes oder mit dem Starterwellenritzel des elektrischen Startermotors umgibt,

In dieser Ausführungsform ist das Kickerkupplungsteil entlang dessen Umfang, d.h. stirnseitig, mit einem als "Starterzahnkranz" bezeichneten Zahnkranz versehen und zum Eingriff in ein als "Starterzahnrad" bezeichnetes Zahnrad des Startergetriebes ausgebildet. Vorzugsweise bilden das Starterzahnrad und der Starterzahnkranz eine stirnseitig miteinander gekoppelte bzw. ineinander greifende Zahnradpaarung.

Ein weiteres Erfindungsmerkmal besteht darin, dass das elektrische Startersystem eine Adapterplatte aufweist, die zur Verbindung des elektrischen Startermotors mit einem Getriebegehäuse des Motorrads ausgebildet ist.

Vorteilhafte Ausführungsformen der Erfindung sind in den jeweiligen Unteransprüchen beansprucht und werden nachfolgend näher erläutert.

Bei Motorrädern mit Kickstarter wird das Drehmoment der mechanischen Kickstart-Anlassvorrichtung üblicherweise axial, über die Kickerkupplung, d.h. über die axial angeordnete und zueinander komplementäre Querverzahnung zwischen dem Kickerritzel und dem Kickerkupplungsteil übertragen. Um den zur Verfügung stehenden Bauraum optimal auszunutzen ist es daher vorteilhaft, dass das Drehmoment des elektrischen Startermotors ebenfalls, jedoch stirnseitig, an das Kickerkupplungsteil, insbesondere über ein als "Startergetriebe" bezeichnetes Stirnradgetriebe des elektrischen Startersystems, übertragen wird. Das Startergetriebe kann dem am Abtrieb des elektrischen Startermotors sitzenden Starterwellenritzel und dem Kickerkupplungsteil zwischengeschaltet sein.

So kann der elektrische Startermotor nach einer vorteilhaften Ausführung der Erfindung achsparallel zur Getriebehauptwelle angeordnet sein und dessen Drehmoment über eine oder mehrere Stufen eines zwischengeschalteten Startergetriebes, vorzugsweise eines Stirnradgetriebes, des elektrischen Startersystems an das mit der Getriebehauptwelle drehmomentübertragend verbundene Kickerkupplungsteil übertragbar sein.

In dieser Ausführungsform ist der elektrische Startermotor bezüglich der Fahrtrichtung des Motorrads hinter dem Getriebe angeordnet, wobei die Getriebehauptwelle und die Starterwelle des elektrischen Startermotors parallel zueinander ausgerichtet sind. Ausgehend von dem an der Starterwelle des elektrischen Startermotors vorgesehenen Starterwellenritzel, wird das Drehmoment über das, vorzugsweise mehrstufige, Startergetriebe an das Kickerkupplungsteil übertragen und von diesem an die Getriebehauptwelle weitergegeben. Durch ein entsprechendes Übersetzungsverhältnis dient das Startergetriebe einerseits dazu, die Drehzahl des elektrischen Startermotors in das an der Getriebehauptwelle erforderliche Drehmoment zu übersetzen, andererseits lässt sich auch der Abstand zwischen Starterwelle des elektrischen Startermotors und Getriebehauptwelle überbrücken. Zweckmäßigerweise ist das Startergetriebe hierzu als Stirnradgetriebe ausgebildet, sodass das Drehmoment stirnseitig an das Kickerkupplungsteil übertragbar ist. Bei dieser Ausgestaltung kann eine insgesamt kompakte Bauweise des Startergetriebes und somit des gesamten elektrischen Startersystems erzielt werden. Indem das Drehmoment über insgesamt kürzere Wege übertragen wird, kann ein besonders sanftes und geräuscharmes Starten des Verbrennungsmotors realisiert werden.

Es ist auch von Vorteil, wenn gemäß einer weiteren Ausführungsform der Erfindungder Starterzahnkranz das Kickerkupplungsteil koaxial zum drehmomentübertragenden Eingriff mit einem Starterzahnraddes Stirnradgetriebes umgibt.

Um zu verhindern, dass die Drehung der Kurbelwelle während des laufenden Verbrennungsmotors, d.h. im Normalbetrieb des Motorrads, über die Getriebehauptwelle an den elektrischen Startermotor zurück übertragen wird und so zu einer ungewollten Drehung des elektrischen Startermotors bzw. zu dessen Beschädigung führt, ist für die Funktion vorteilhaft, wenn nach einer erfindungsgemäßen Ausführungsform, das elektrische Startersystem eine Starterfreilaufvorrichtung aufweist. Die Starterfreilaufvorrichtung ist dem elektrischen Startermotor, insbesondere dem Starterwellenritzel, und dem Kickerkupplungsteil zwischengeschaltet, sodass in der Anlass- und Antriebsdrehrichtung der Getriebehauptwelle ausgehend von dem elektrischen Startermotor zu dem Kickerkupplungsteil eine drehmomentübertragende Kopplung ausgebildet ist und ausgehend von dem Kickerkupplungsteil zu dem elektrischen Startermotor eine freilaufende Kopplung ausgebildet ist.

Um eine vollständige Entkopplung zwischen dem elektrischen Startermotor und dem Kickerkupplungsteil zu realisieren, wäre es z. B. denkbar, einen axialen Versatz zwischen dem Starterwellenritzel und dem Kickerkupplungsteil zu ermöglichen. Insbesondere könnten das Starterwellenritzel und/oder ein in das Starterzahnrad eingreifendes Starterritzel linear verschiebbar ausgebildet sein, sodass diese zur Übertragung des Drehmoments und der Drehbewegung von dem elektrischen Startermotor zu dem Kickerkupplungsteil ineinandergreifend angeordnet werden bzw. zueinander versetzt angeordnet werden, um eine Übertragung eines Drehmoments und einer Drehbewegung von dem Kickerkupplungsteil zu dem elektrischen Startermotor zu verhindern. Alternativ und platzsparender kann die Starterfreilaufvorrichtung auch das Kickerkupplungsteil koaxial umgebend angeordnet sein.

In Weiterbildung ist die Starterfreilaufvorrichtung daher in der Art eines Klemmkörper- oder Klemmrollenfreilaufs, insbesondere eines Wälzlagerfreilaufs, ausgeführt und umgibt das Kickerkupplungsteil koaxial, wobei insbesondere in einer der Anlass- und Antriebsdrehrichtung entgegengesetzten Rücklaufrichtung eine Drehbewegung der Getriebehauptwelle gesperrt ist.

Hierbei ist es besonders zweckmäßig, dass die Starterfreilaufvorrichtung einen radial äußeren Laufring und einen radial inneren Laufring aufweist, wobei der radial äußere Laufring drehmomentübertragend mit dem Starterzahnkranz des elektrischen Startersystems und der radial innere Laufring drehmomentübertragend mit dem Kickerkupplungsteil der Kickstart-Anlassvorrichtung verbunden ist.

Die Starterfreilaufvorrichtung kann vorzugsweise als einreihiger oder zweireihiger Wälzkörperfreilauf ausgebildet sein, wobei zwischen dem radial äußeren Laufring und dem radial inneren Laufring entsprechend ein oder zwei Laufkanäle vorgesehen sind, innerhalb derer Walzkörper, insbesondere Zylinder oder Kugeln, angeordnet sind. In Anlass- und Antriebsdrehrichtung der Getriebehauptwelle und zum Starten des Verbrennungsmotors, d. h. wenn die Drehbewegung des elektrischen Startermotors auf die Getriebehauptwelle übertragen werden soll, "klemmt" der Wälzkörperfreilauf, wodurch eine Relativbewegung zwischen radial äußerem und radial innerem Laufring gesperrt ist. Hierdurch wird die Übertragung der Drehbewegung bzw. des Drehmoments des elektrischen Startermotors von der Starterfreilaufvorrichtung auf das Kickerkupplungsteil und die damit verbundene Getriebehauptwelle ermöglicht. Sobald der Verbrennungsmotor gestartet ist und die Getriebehauptwelle von dem Verbrennungsmotor angetrieben wird bzw. wenn die Drehzahl des radial inneren Laufrings die Drehzahl des radial äußeren Laufrings übersteigt, löst die Starterfreilaufvorrichtung automatisch und die Walzkörper wälzen innerhalb der Laufkanäle frei ab, sodass sich zwar das fest auf der Getriebehauptwelle sitzende Kickerkupplungsteil mit der Getriebehauptwelle dreht, die Drehbewegung bzw. das Drehmoment jedoch nicht an den radial außen liegenden Laufring bzw. auch nicht an den mit diesem verbundenen Starterzahnkranz übertragen wird. Die Starterfreilaufvorrichtung fungiert hier als Überholkupplung. Indem eine derartige, besonders vorteilhaft als Wälzlagerfreilauf ausgeführte Starterfreilaufvorrichtung zwischen dem Startergetriebe und der Getriebehauptwelle des Motorrads vorgesehen ist, können Beschädigungen des elektrischen Startermotors verhindert werden. Zusätzlich weist ein Wälzlagerfreilauf eine hohe Laufruhe auf, wodurch eine insgesamt geringere Geräuschentwicklung sowohl beim Startvorgang also auch während des Normalbetriebs bei laufendem Verbrennungsmotor erzielt wird.

Zusätzlich kann die Starterfreilaufvorrichtung nach einer optionalen Erfindungsvariante auch die Funktion einer Rücklaufsperre aufweisen. Hierbei wird eine Drehbewegung der Getriebehauptwelle ausschließlich in der Anlass- und Antriebsdrehrichtung ermöglicht, wohingegen eine rückläufige Drehbewegung in der entgegengesetzten Rücklaufrichtung gesperrt wird. In der Rücklaufrichtung der Getriebehauptwelle "klemmt" der Wälzkörperfreilauf, sofern das Drehmoment am radial inneren Laufring anliegt. Insbesondere aufgrund des zwischengeschalteten, mehrstufigen Startergetriebes, welches in dieser Richtung untersetzend wirkt, wird ein ausreichend hoher Anlaufwiderstand erzeugt, sodass sich die Getriebehauptwelle mittels der Starterfreilaufvorrichtung in Rücklaufrichtung sperren lässt. Diese Funktion hat den Vorteil, dass eine ungewollte Drehung des elektrischen Startermotors in der Rücklaufrichtung unterbunden ist. Das Motorrad kann weiterhin durch Schalten in den Leerlauf, d.h. Entkoppeln der Getriebehauptwelle vom Hinterrad, rückwärts geschoben werden.

In Weiterbildung der Erfindung ist vorgesehen, dass die Adapterplattezwischen einer Abdeckung der Kickstart-Anlassvorrichtung und einem Getriebegehäuse des Motorrads angeordnet ist und der elektrische Startermotor mittels der Adapterplatte an dem Getriebegehäuse des Motorrads befestigt ist.

Um den elektrischen Startermotor möglichst platzsparend in dem zur Verfügung stehenden Bauraum unterzubringen, ist es zweckmäßig, diesen in Fahrtrichtung des Motorrads hinter dem Motorradgetriebe, vorzugsweise hinter dem Getriebegehäuse anzubringen. Die Befestigung des elektrischen Startermotors wird vorteilhafterweise mittels einer Adapterplatte realisiert, welche auf der die mechanische Kickstart-Anlassvorrichtung aufweisenden Motorradseite, üblicherweise in Fahrtrichtung des Motorrads auf dessen rechter Seite, an dem Getriebegehäuse angeordnet ist, insbesondere mit dem Getriebegehäuse, z.B. über Stehbolzen verschraubt ist. Die Adapterplatte kann hierzu einen Außenumfang aufweisen, der im Wesentlichen dem Außenumfang der Abdeckung der Kickstart-Anlassvorrichtung, auch "Kickerdeckel" genannt, entspricht um bündig mit diesem abzuschließen. Zusätzlich weist die Adapterplatte eine seitliche Erweiterung auf, die als Befestigungsabschnitt ausgebildet ist, um mit dem elektrischen Startermotor verbunden, insbesondere verschraubt, zu werden. Die Adapterplatte stellt somit die einzige Verbindung zum elektrischen Startermotor dar und sollte, um dem aufgebrachten Drehmoment und den am Verbindungsort auftretenden Kräften standhalten zu können, mit einer Mindeststärke von bspw. 10 mm ausgebildet sein. Vorzugsweise weist die Adapterplatte eine Stärke zwischen 15-20 mm auf, besonders bevorzugt in etwa 20 mm. Aufgrund der Adapterplatte erhöht sich der Abstand zwischen der Kickstart-Abdeckung und dem Gehäusedeckel. Zur Befestigung der Kickstart-Abdeckung mit der dazwischenliegenden Adapterplatte an dem Gehäusedeckel innerhalb der an dem Original-Getriebegehäuse vorgesehenen Ausnehmungen sind daher Befestigungsmittel, insbesondere Stehbolzen, zu verwenden, die länger als die ursprünglich vorgesehenen Befestigungsmittel sind. Bei manchen Motorradtypen kann aus diesem Grund auch eine Anpassung der Abgasanlage notwendig sein. Sowohl zwischen der Kickstarter-Abdeckung und der Adapterplatte, als auch zwischen der Adapterplatte und dem Getriebegehäuse ist vorteilhafterweise jeweils eine Dichtung vorgesehen.

Weitere vorteilhafte Funktionen der Adapterplatte sind außerdem der Schutz und die Aufnahme des Startergetriebes, der Starterfreilaufvorrichtung und/oder des Kickerkupplungsteils.

Zweckmäßigerweise weist die Adapterplatte daher in Weiterbildung des obigen Ausführungsbeispiels einen Aufnahmebereich zur Aufnahme der Starterfreilaufvorrichtung und/oder zur Aufnahme des Starterzahnkranzes auf und/oder bildet einen solchen Aufnahmebereich aus.

Zusätzlich kann die Adapterplatte, insbesondere lösbar, mit einem oder mehreren Starterverbindungsstücken verbunden sein, die zur Aufnahme weiterer Getriebeelemente des Startergetriebes und/oder zur Verbindung mit dem elektrischen Startermotor, insbesondere mit dessen abtriebsseitigem Starterwellenritzel vorgesehen sind und gemeinsam ein Startergetriebegehäuse bilden.

Um das Nachrüsten von Motorrädern älteren Baujahres, insbesondere von Big Twin Harley-Davidson Motorrädern mit Viergang-Getriebe, mit einem elektrischen Startersystem zu erleichtern und auch den Einbau und Ausbau bzw. das Auswechseln defekter und/oder abgenutzter Komponenten durch Ersatzteile zu vereinfachen, kann nach einer Erfindungsvariante das elektrische Startersystem eine Kickerwelle mit abnehmbarem Federsitz zur Aufnahme einer Kickstartfeder aufweisen, wobei die Kickerwelle zur drehmomentübertragenden Verbindung mit einem Kickerzahnrad ausgebildet ist

In der Original-Ausführung der mechanischen Kickstart-Anlassvorrichtung ist vorgesehen, die Kickstart-Abdeckung, d.h. den Kickerdeckel, gemeinsam mit der Kickerwelle und dem daran drehmomentübertragend befestigten Kickerzahnrad auszubauen. Aufgrund der erfindungsgemäß zusätzlich am Kickerkupplungsteil angebrachten Bauteile des elektrischen Startersystems, insbesondere aufgrund des Starterzahnkranzes und/oder der Starterfreilaufvorrichtung, die das Kickerkupplungsteil jeweils koaxial umgeben, ist jedoch der Umfang des Kickerkupplungsteils gegenüber dem Originalbauteil, der Kickerratsche, vergrößert. Hierdurch wird das Kickerzahnrad entlang der Kickerwelle vor dem Kickerkupplungsteil überlappt, sodass ein Ausbau der Kickerwelle gemeinsam mit dem Kickerzahnrad und gemeinsam mit dem Kickerdeckel so nicht länger möglich ist.

Abhilfe wird geschaffen, indem der Federsitz, an welchem die Kickerfeder befestigt wird, von der Kickerwelle abnehmbar bzw. lösbar gestaltet ist. Um weiterhin Zugriff zu den hinter dem Kickerdeckel angeordneten Originalbauteilen der Kickstart-Anlassvorrichtung und den Bauteilen des elektrischen Startersystems zu erhalten, kann in dieser Ausführungsform der Kickerdeckel bzw. die Kickstarter-Abdeckung zum Nachrüsten, Umbauen und Auswechseln der Bauteile, durch vorheriges Entfernen des Federsitzes über die Kickerwelle abgezogen werden, ohne die Kickerwelle selbst auszubauen.

Um ein Motorrad, insbesondere ein Motorrad der Marke Harley-Davidson mit Viergang-Getriebe, mit einem elektrischen Startersystem zu versehen und gleichzeitig die Funktion der mechanischen Kickstart-Anlassvorrichtung zu erhalten, kann das Original-Motorrad zweckmäßigerweise mit einem erfindungsgemäßen elektrischen Startersystem nachgerüstet werden, wobei dieses zumindest teilweise in die mechanische Kickstart-Anlassvorrichtung integriert ist.

Die eingangs gestellte Erfindungsaufgabe wird daher außerdem durch einen elektrischen Startersatz zum Nachrüsten eines Motorrads mit mechanischer Kickstart-Anlassvorrichtung, insbesondere eines Motorrads der Marke Harley-Davidson mit Viergang-Getriebe, gelöst, wobei das Motorrad eine Getriebehauptwelle aufweist, die zum Starten des Motorrads und während des Normalbetriebs des Motorrads in einer Anlass- und Antriebsdrehrichtung dreht.

Gemäß der Erfindung umfasst der elektrische Startersatz einen elektrischen Startermotor mit einem davon antreibbaren Starterwellenritzel, ein Kickerkupplungsteil mit Starterfreilaufvorrichtung, wobei das Kickerkupplungsteil zur drehmomentübertragenden Verbindung mit der Getriebehauptwelle und die Starterfreilaufvorrichtung zur, insbesondere stirnseitigen, Kopplung des Kickerkupplungsteils mit dem Starterwellenritzel ausgebildet ist, und eine Adapterplatte, die zur Verbindung des elektrischen Startermotors mit einem Getriebegehäuse des Motorrads und/oder zur Aufnahme des Kickerkupplungsteils mit Starterfreilaufvorrichtung ausgebildet ist.

Erfindungsgemäß ist also das Kickerkupplungsteil selbst Bestandteil des elektrischen Startersatzes und ist axial zum Eingriff in ein Kickerritzel der mechanischen Kickstart-Anlassvorrichtung und stirnseitig zur drehmomentübertragenden Kopplung mit dem elektrischen Startermotor ausgebildet. Das Kickerkupplungsteil ist ferner mit einer vorzugsweise integrierten Starterfreilaufvorrichtung ausgestattet. Insbesondere kann die Starterfreilaufvorrichtung das Kickerkupplungsteil in der Art eines Wälzlagerfreilaufs koaxial umgeben, wobei ein radial innerer Laufring drehmomentübertragend, form- und/oder kraftschlüssig mit dem Kickerkupplungsteil verbunden ist. Alternativ können das Kickerkupplungsteil und der radial innere Laufring auch einstückig ausgebildet sein. Vorzugsweise weist der radial äußere Laufring an seiner stirnseitigen Fläche eine zahnkranzartig ausgebildete Außenverzahnung auf oder ist mit einem den radial äußeren Laufring koaxial umgebenden Zahnkranz drehmomentübertragend, form- und/oder kraftschlüssig verbunden.

In axialer Richtung ist das Kickerkupplungsteil mit einer Querverzahnung versehen, die komplementär zu einer Querverzahnung des Original-Kickerritzels ausgebildet ist und formschlüssig in diese eingreifen kann. Die Querverzahnung bildet in Antriebsdrehrichtung der Getriebehauptwelle einen Freilauf zwischen dem Kickerkupplungsteil und dem Kickstarter, die Starterfreilaufvorrichtung ist, ebenfalls in Antriebsdrehrichtung der Getriebehauptwelle, zur Ausbildung eines Freilaufs zwischen dem Kickerkupplungsteil und dem elektrischen Startermotor vorgesehen. Das Kickerkupplungsteil mit integrierter Starterfreilaufvorrichtung stellt somit das zentrale Verbindungsglied zwischen elektrischem Startersystem und mechanischer Kickstart-Anlassvorrichtung dar.

In vorteilhafter Ausgestaltung ist der elektrische Startersatz vormontiert, wobei die Adapterplatte, insbesondere über ein oder mehrere Starterverbindungsstücke, mit dem elektrischen Startermotor, vorzugsweise lösbar, verbunden ist und/oder das Kickerkupplungsteil mit Starterfreilaufvorrichtung innerhalb eines hierzu ausgebildeten Aufnahmebereichs der Adapterplatte angeordnet ist.

Dadurch, dass die Bauteile des elektrischen Startersatzes zumindest größtenteils, bereits vormontiert sind, wird ein Nachrüsten des Motorrads erheblich vereinfacht. Der Umbau bzw. die Integration des elektrischen Startersatzes in die mechanische Kickstart-Anlassvorrichtung kann auch ohne spezielle Fachkenntnisse und/oder ohne spezielles Werkzeug, wie z.B. Schweißgeräte, durch den Benutzer selbst vorgenommen werden. Das Aufsuchen einer Fachwerkstatt ist nicht zwingend erforderlich.

Nach einer weiter vorteilhaften Variante umfasst der elektrische Startersatz ein Starterzahnrad und einen Starterzahnkranz, wobei der Starterzahnkranz das Kickerkupplungsteil und die Starterfreilaufvorrichtung koaxial umgebend angeordnet ist und das Starterzahnrad als Bestandteil eines Startergetriebes zum Eingriff in das Starterwellenritzel des elektrischen Startermotors und zum Eingriff in den Starterzahnkranz ausgebildet und anordenbar ist.

Um ein Nachrüsten sowie den Aus- und Einbau möglichst einfach und unkompliziert zu gestalten, umfasst der elektrische Startersatz nach einer vorteilhaften Erfindungsausgestaltung zusätzlich eine Kickerwelle mit abnehmbarem Federsitz, wobei die Kickerwelle zur drehmomentübertragenden Verbindung mit einem Kickerzahnrad der Kickstart-Anlassvorrichtung ausgebildet ist.

Als zusätzliche Komponenten, zum Ausgleich der zwischen dem Getriebegehäuse und dem Kickerdeckel anzuordnenden Adapterplatte kann der elektrische Startersatz gemäß Ausgestaltungsbeispiel eine Kickerwelle und/oder eine Bremswelle und/oder einen Getriebekupplungsbetätigungshebel und/oder eine Kupplungsdruckstange jeweils zum bedarfs- und/oder wahlweisen Austausch mit den entsprechenden Originalbauteilen des Motorrads aufweisen.

Gegenüber den Originalbauteilen sind die Kickerwelle und/oder die Bremswelle und/oder der Getriebekupplungsbetätigungshebel und/oder die Kupplungsdruckstange vorzugsweise jeweils um die Stärke der Adapterplatte, insbesondere um 10 - 20 mm verlängert.

Schließlich wird die eingangs gestellte Aufgabe erfindungsgemäß auch durch ein Motorrad gelöst, das ausgerüstet, nachgerüstet oder versehen ist mit einem elektrischen Startersystem nach einer der obigen Ausführungsformen oder einem elektrischen Startersatz nach einer der obigen Varianten.

Weitere Einzelheiten, Merkmale, Merkmals(unter)-Kombinationen, Vorteile und Wirkungen auf der Basis der Erfindung ergeben sich aus der nachfolgenden Beschreibung bevorzugter Ausführungsbeispiele der Erfindung und den Zeichnungen. Diese zeigen in
Fig. 1 eine schematische Perspektivdarstellung einer beispielhaften Ausführungsform des erfindungsgemäßen elektrischen Startersystems mit Adapterplatte und montiert am Getriebegehäuse des Motorrads, jedoch ohne Abdeckung der Kickstart-Anlassvorrichtung, in
Fig. 2 eine schematisch perspektivische Einzelansicht der Adapterplatte aus Figur 1, in
Fig. 3 eine schematisch perspektivische Explosionsdarstellung der beispielhaften Ausführungsform des erfindungsgemäßen elektrischen Startersystems aus Figur 1, zusammen mit einer Abdeckung der Kickstart-Anlassvorrichtung, in
Fig. 4 eine schematische Seitenansicht der beispielhaften Ausführungsform des erfindungsgemäßen elektrischen Startersystems aus Figur 1, jedoch ohne Adapterplatte, in
Fig. 5 eine schematische Perspektivdarstellung der beispielhaften Ausführungsform des erfindungsgemäßen elektrischen Startersystems gemäß Figur 1 aus Sicht des Getriebegehäuses und in
Fig. 6 eine schematisch perspektivische Explosionsdarstellung einer beispielhaften Ausführungsform eines erfindungsgemäßen elektrischen Startersatzes, montiert an einer Abdeckung der Kickstart-Anlassvorrichtung.

Die Figuren sind lediglich beispielhafter Natur und dienen nur dem Verständnis der Erfindung. Die gleichen Elemente sind mit denselben Bezugszeichen versehen.

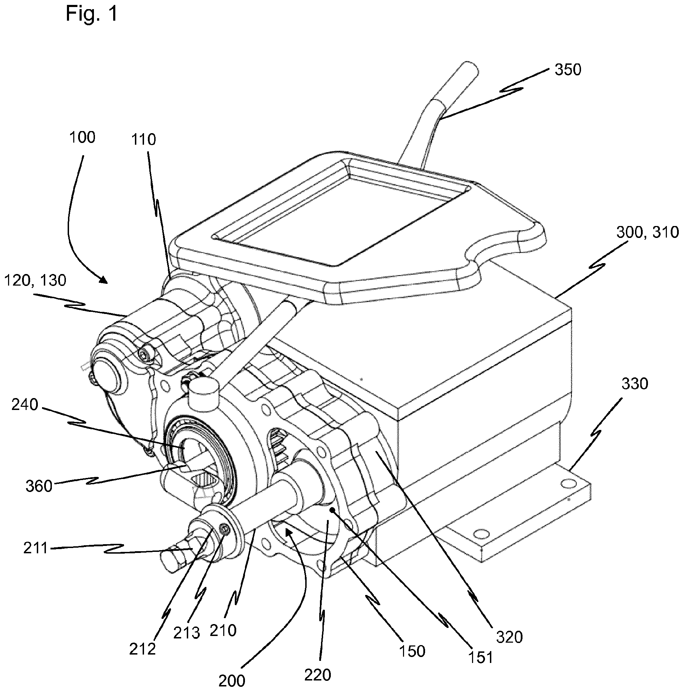

Figur 1 zeigt eine schematische Perspektivdarstellung einer beispielhaften Ausführungsform des erfindungsgemäßen elektrischen Startersystems 100 mit einer Adapterplatte 150 und montiert am Getriebegehäuse 310 des hier nicht gezeigten Motorrads. Die Abbildung ist von schräg oben aus Sicht der Motorradfront und der mechanischen Kickstart-Anlassvorrichtung 200 dargestellt, wobei letztere üblicherweise auf der in Fahrtrichtung rechten Motorradseite angeordnet ist. Neben der Adapterplatte 150 umfasst das elektrische Startersystem 100 einen elektrischen Startermotor 110 und ein Startergetriebe 120, das innerhalb eines Startergetriebegehäuses 130 angeordnet ist. Der elektrische Startermotor 110 ist in Fahrtrichtung des Motorrads hinter dem Getriebegehäuse 310 angeordnet. Das Getriebegehäuse 310 umgibt die wesentlichen Komponenten des Getriebes 300 des Motorrads und sitzt auf einer Getriebegrundplatte 330. Die Adapterplatte 150 weist einen äußeren Umfang auf, der im Wesentlichen der Umfangsform eines Adapterabschnitts 320 des Getriebegehäuses 310 entspricht und ist bspw. über Schrauben oder Stehbolzen bündig an diesem befestigt. In der Abbildung ferner gezeigt sind der Getriebekupplungsbetätigungshebel 350 und die Kupplungsdruckstange 360.

Im Adapterabschnitt 320 des Getriebegehäuses 310 sind ferner Bauteile der mechanischen Kickstart-Anlassvorrichtung 200 angeordnet, insbesondere befindet sich dort das Kickerzahnrad 220, welches zur Drehmomentübertragung form- und/oder kraftschlüssig mit der Kickerwelle 210 verbunden ist. Die Kickerwelle 210 ragt aus einer hier nierenförmig ausgestalteten Ausnehmung 151 der Adapterplatte 150 heraus und weist an ihrem äußeren Ende einen Pedalanschluss 211 zur formschlüssigen Aufnahme eines nicht gezeigten Kickstartpedals auf. An der Kickerwelle 210 ist außerdem ein Federsitz 212 zur Verbindung mit der ebenfalls nicht gezeigten Kickerfeder vorgesehen. Vorzugsweise kann der Federsitz 212 über den Pedalanschluss 211 von der Kickerwelle 210 abgezogen werden und ist hierzu, insbesondere mittels einer Madenschraube 213, lösbar mit der Kickerwelle 210 verbunden. In der Darstellung nicht sichtbar ist das Kickerritzel, das zum Eingriff in das Kickerzahnrad 220 drehbeweglich auf der ebenfalls hier nicht sichtbaren Getriebehauptwelle 340 des Getriebes 300 gelagert ist. Das Kickerritzel bildet gemeinsam mit dem Kickerkupplungsteil 240 eine Kickerkupplung, wobei das Kickerkupplungsteil 240 zur Übertragung des Drehmoments drehfest bzw. drehmomentübertragend mit der Getriebehauptwelle 340 verbunden ist.

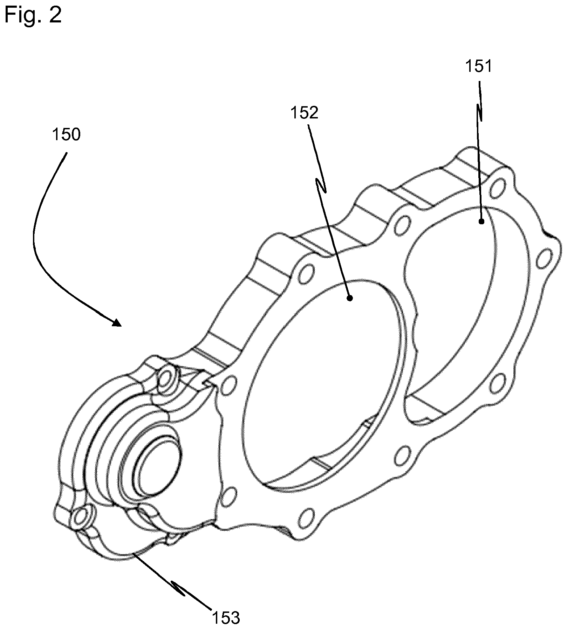

Eine schematisch perspektivische Einzelansicht der Adapterplatte 150 aus Figur 1 kann der Figur 2 entnommen werden. Die Adapterplatte 150 umfasst die nierenförmige Ausnehmung 151, welche im eingebauten Zustand von der Kickerwelle 210 durchsetzt ist, einen Aufnahmebereich 152, der zur Aufnahme des Kickerkupplungsteils 240 ausgebildet und ausgeformt ist und einen Befestigungsabschnitt 153, der zur Befestigung mit dem elektrischen Startermotor 110 vorgesehen ist und gleichzeitig ein abschließendes Teilstück des Startergetriebegehäuses 130 ausbildet. Über den Befestigungsabschnitt 153 stellt die Adapterplatte 150 somit die einzige Verbindung zwischen elektrischem Startermotor 110 und Getriebegehäuse 310 dar, anders ausgedrückt ist der elektrische Startermotor 110 ausschließlich an dem Befestigungsabschnitt 153 der Adapterplatte 150 befestigt. Um dem durch den Startermotor 110 aufgebrachten Drehmoment und den zwischen Befestigungsabschnitt 153 und Aufnahmebereich 152 auftretenden Kräften standhalten zu können, ist die Adapterplatte, zumindest an dieser Stelle, mit einer Mindeststärke von bspw. 10 mm ausgebildet. Vorzugsweise weist die Adapterplatte eine Stärke zwischen 15-20 mm auf, besonders bevorzugt eine Stärke von in etwa 20 mm.

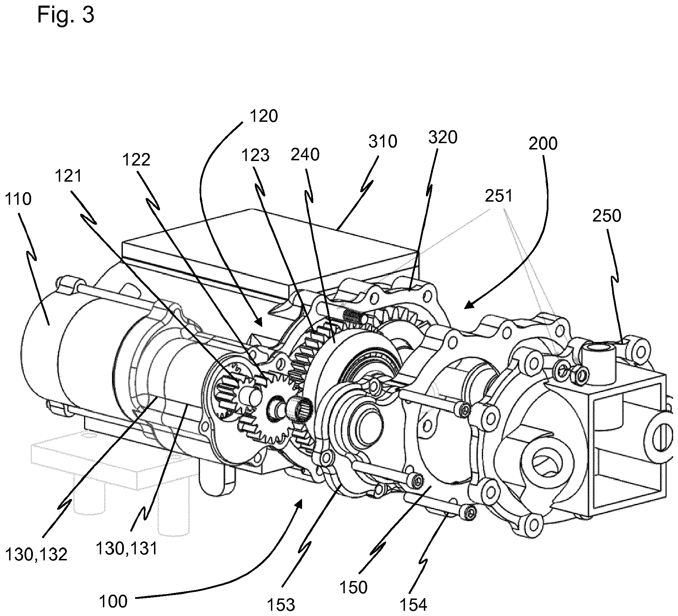

In der Figur 3 ist eine schematisch perspektivische Explosionsdarstellung der beispielhaften Ausführungsform des erfindungsgemäßen elektrischen Startersystems 100 aus Figur 1 dargestellt, wobei zusätzlich eine Abdeckung 250 der mechanischen Kickstart-Anlassvorrichtung 200 gezeigt ist. Die Abbildung ist schräg aus Sicht des Motorradhecks und der Kickstart-Anlassvorrichtung 200 dargestellt. Zwischen der Abdeckung 250 und dem Getriebegehäuse 310 ist die Adapterplatte 150 angeordnet, wodurch sich der ursprüngliche Abstand zwischen den beiden Originalbauteilen (Abdeckung 250 und Getriebegehäuse 310) um die Stärke der Adapterplatte 150 erhöht. Zur Befestigung der Kickstart-Abdeckung 250 mit der dazwischenliegenden Adapterplatte 150 innerhalb der an dem Adapterabschnitt 320 des Getriebegehäuses 310 vorgesehenen Ausnehmungen sind Befestigungsmittel 251 zu verwenden. Als Befestigungsmittel 251 ist beispielhaft ein Stehbolzen mit Federscheibe und Mutter dargestellt. Der Befestigungsabschnitt 153 der Adapterplatte 150 wird mittels dreier Schrauben 154 zur Befestigung des elektrischen Startermotors 110 genutzt. Vorzugsweise wird der elektrische Startermotor 110 mittelbar über das Startergetriebegehäuse 130 mit dem Befestigungsabschnitt 153 verschraubt, wobei das Startergetriebegehäuse 130 zweiteilig ausgebildet ist, mit einem ersten Starterverbindungsstück 131, welches dem Befestigungsabschnitt 153 zugeordnet ist und einem zweiten Starterverbindungstück 132, welches dem elektrischen Startermotor 110 zugeordnet ist.

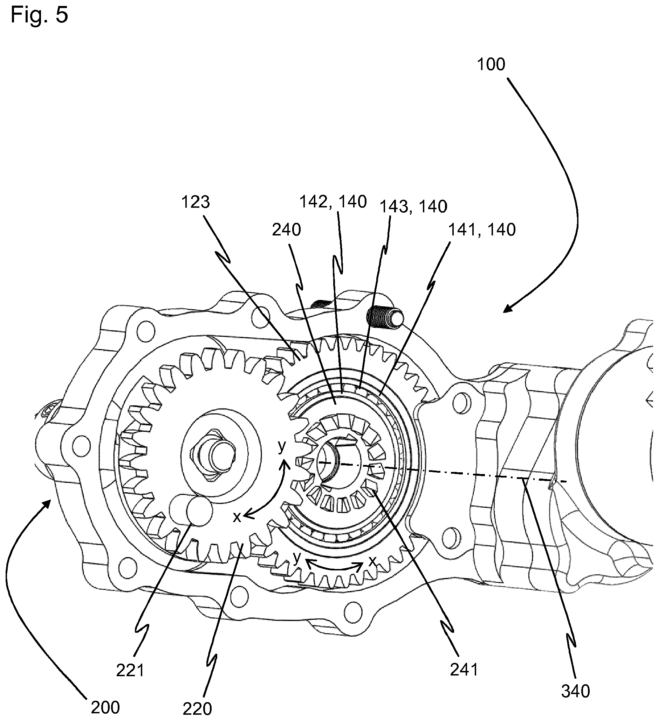

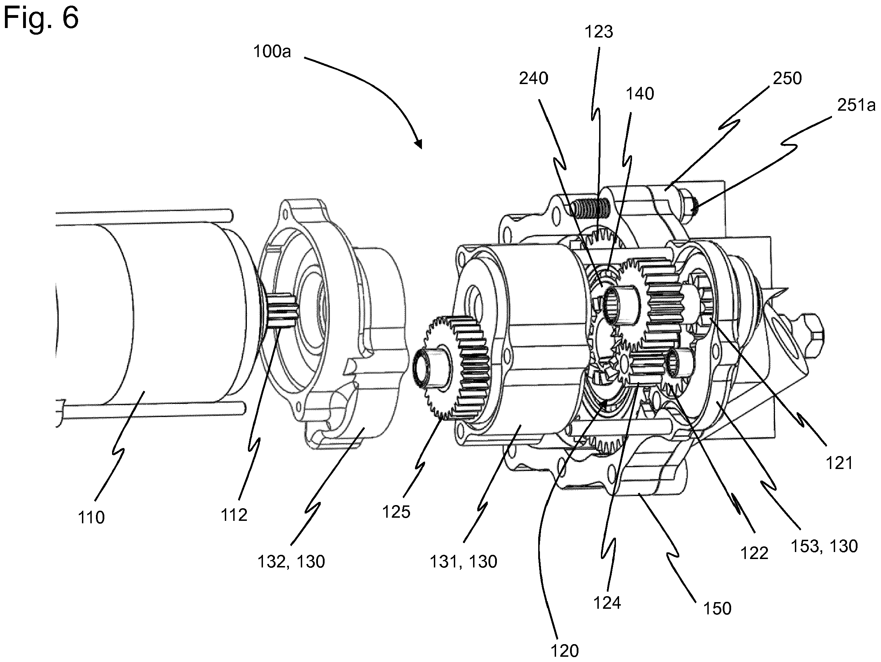

Weiterhin kann der Figur 3 ein Teil des innerhalb des Startergetriebegehäuses 130 angeordneten Startergetriebes 120 des elektrischen Startersystems 100 entnommen werden. Das Startergetriebe 120 umfasst ein Starterritzel 121, das gemeinsam mit dem Starterzahnrad 122 eine Zahnrandpaarung bildet um das Drehmoment des elektrischen Startermotors 110, welches an dem in dieser Darstellung nicht sichtbaren Starterwellenritzel 112 des elektrischen Startermotors 110 abgegriffen wird, stirnseitig an das Kickerkupplungsteil 240 (s. auch Figur 5) zu übertragen. Das Starterzahnrad 122 greift hierzu mit seiner Außenverzahnung in einen Starterzahnkranz 123 ein, welcher das Kickerkupplungsteil 240 entlang dessen Stirnfläche umgibt. Die übrigen Bestandteile des Startergetriebes 120 sind in der Figur 6 gezeigt und werden an entsprechender Stelle näher erläutert.

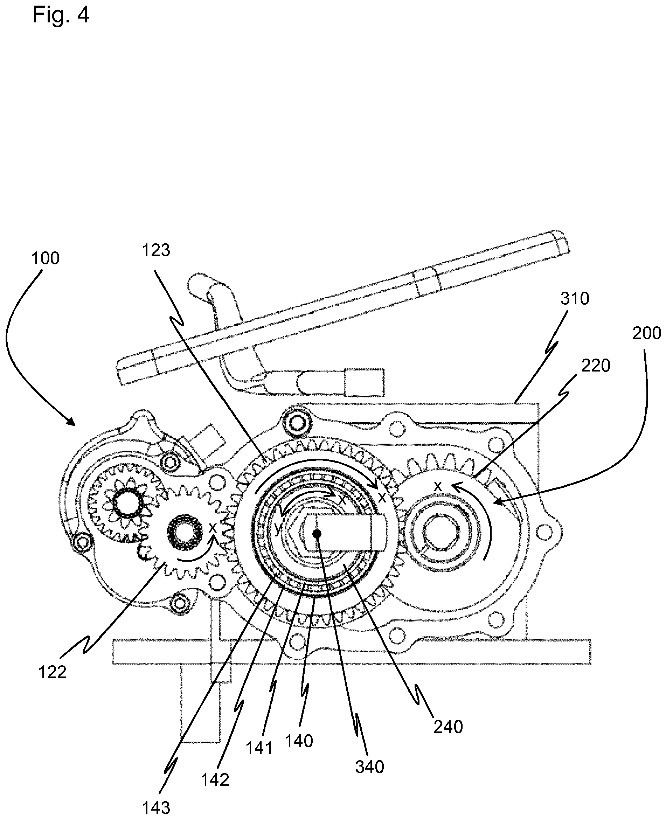

In der Figur 4, welche eine schematische Seitenansicht der beispielhaften Ausführungsform des erfindungsgemäßen elektrischen Startersystems 100 aus Figur 1 zeigt, sind die Drehrichtungen der Getriebehauptwelle 340 dargestellt. Zum Starten des Verbrennungsmotors wird die Getriebehauptwelle 340 durch das elektrische Startersystem 100 oder alternativ mittels der mechanischen Kickstart-Anlassvorrichtung 200 in einer Anlass- und Antriebsdrehrichtung x gedreht. Auch während des normalen Fahrbetriebs bzw. bei laufendem Verbrennungsmotor dreht die Getriebehauptwelle 340 gemeinsam mit der Kurbelwelle in der Anlass- und Antriebsdrehrichtung x. Wird das Motorrad hingegen rückwärts geschoben, würde die Drehbewegung des Hinterrads in einer entgegengesetzten Rücklaufrichtung y bei eingelegtem Gang auf die Getriebehauptwelle 340 übertragen werden. Auf der Getriebehauptwelle 340 ist das Kickerkupplungsteil 240 drehmomentübertragend gelagert. Das Kickerkupplungsteil 240 wird koaxial von einer als Wälzlagerfreilauf ausgeführten Starterfreilaufvorrichtung 140 umgeben. Die Starterfreilaufvorrichtung 140 weist einen radial inneren Laufring 142 und einen radial äußeren Laufring 141 auf, die in der hier beispielhaft gezeigten Ausführung als zweireihiger Wälzkörperfreilauf zwei Laufkanäle ausbilden, innerhalb derer Walzkörper 143, hier Kugeln, angeordnet sind. Der radial innere Laufring 142 ist drehmomentübertragend mit dem Kickerkupplungsteil 240 verbunden. Die Verbindung kann kraft- und/oder formschlüssig, bspw. als Presspassung, ausgeführt sein, alternativ ist auch denkbar, das Kickerkupplungsteil 240 mit dem inneren Laufring 142 einteilig auszubilden. Der radial äußere Laufring 141 ist wiederum kraft- und/oder formschlüssig, bspw. als Presspassung oder alternativ einteilig mit dem Starterzahnkranz 123 drehmomentübertragend verbunden. In den Starterzahnkranz 123 greift die Außenverzahnung des Starterzahnrads 122 stirnseitig ein. In Anlass- und Antriebsdrehrichtung x der Getriebehauptwelle 340 fungiert die Starterfreilaufvorrichtung 140 als Überholkupplung und "klemmt" solange der radial äußere Laufring 141 schneller läuft als der radial innere Laufring 142. Hierdurch ist eine Relativbewegung zwischen radial äußerem Laufring 141 und radial innerem Laufring 142 gesperrt und eine Übertragung der Drehbewegung und des Drehmoments von "radial außen" nach "radial innen" ermöglicht. Zum Starten des Verbrennungsmotors kann so ein von dem elektrischen Startermotor 110 erzeugtes Drehmoment in Anlass- und Antriebsdrehrichtung x auf die Getriebehauptwelle 340 übertragen werden. Sobald die Drehzahl der Getriebehauptwelle 340 ausreichend hoch ist, bzw. der Verbrennungsmotor gestartet ist und selbst die Getriebehauptwelle 340 antreibt, "überholt" der radial innere Laufring 142 den radial äußeren Laufring 141, wodurch die Starterfreilaufvorrichtung 140 automatisch die Verbindung löst, d. h. die Walzkörper 143 wälzen innerhalb der Laufkanäle frei ab. Hierbei wird eine Übertragung der Drehbewegung bzw. des Drehmoments von "radial innen" nach "radial außen", d. h. von der Getriebehauptwelle 340 auf den elektrischen Startermotor 110 in der Anlass- und Antriebsdrehrichtung x verhindert und so eine Beschädigung desselben vermieden. Um beim Rückwärtsschieben des Motorrads bei eingelegtem Vorwärtsgang eine Drehung der Getriebehauptwelle 340 in der Rücklaufrichtung y und so eine etwaige Beschädigung des elektrischen Startermotors 110 zu verhindern, fungiert die Starterfreilaufvorrichtung 140 bei eingelegtem Vorwärtsgang als Rücklaufsperre und "klemmt", sofern andersherum der radial innere Laufring 142 schneller läuft als der radial äußere Laufring 141 bzw. die Rückwärtsdrehbewegung von dem Hinterrad des Motorrads an die Getriebehauptwelle 340 übertragen wird. Die eigentliche Sperrung der Getriebehauptwelle 340 in Rücklaufrichtung y erfolgt dann über einen Endanschlag des Kickerzahnrads 220. Hierzu ist das Kickerzahnrad 220 mit einem Anschlagbolzen 221 versehen, der zum Anlaufen gegen eine entsprechend korrespondierende Anschlagfläche innerhalb der Abdeckung 250 der Kickstart-Anlassvorrichtung 200 ausgebildet ist. Durch den Anschlagbolzen 221 und die Anschlagfläche gemeinsam wird der Endanschlag realisiert, welcher einerseits die Ruheposition des Kickerzahnrads 220 im Fahrbetrieb nach dem Startvorgang festgelegt, andererseits aber auch die Getriebehauptwelle 340 in Rücklaufrichtung y sperrt. Um das Motorrad dennoch rückwärts schieben zu können, kann wie üblich in den Leerlauf geschaltet werden. In Darstellungsrichtung der Figur 4 hinter der Starterfreilaufvorrichtung 140 bzw. zwischen der Starterfreilaufvorrichtung 140 und dem und dem Getriebegehäuse 310 ist das Kickerzahnrad 220 angeordnet, welches teilweise von der Starterfreilaufvorrichtung 140 mit Starterzahnkranz 123 überlappt wird.

Gemäß der Figur 5 ist eine schematische Perspektivdarstellung der beispielhaften Ausführungsform des erfindungsgemäßen elektrischen Startersystems 100 aus Figur 1 von der gegenüberliegenden Seite, d.h. aus Sicht des hier nicht gezeigten Getriebegehäuses 310 dargestellt. Insbesondere zu erkennen ist das Kickerkupplungsteil 240 welches koaxial entlang eines von der hier gestrichelt angedeuteten Getriebehauptwelle 340 ausgehenden Radius zunächst von dem radial inneren Laufring 142, den Walzkörpern 143 und dem radial äußeren Laufring 141, die gemeinsam die Starterfreilaufvorrichtung 140 bilden, umgeben ist. Abschließend ist der Starterzahnkranz 123 mit stirnseitiger Verzahnung am äußeren Umfang angeordnet. In axialer Richtung ist das Kickerkupplungsteil 240 mit einer Querverzahnung 241 versehen, die komplementär zu einer Querverzahnung des hier nicht gezeigten Original-Kickerritzels der mechanischen Kickstart-Anlassvorrichtung 200 ausgebildet ist. Das Original-Kickerritzel ist drehbeweglich auf der hier gestrichelt angedeuteten Getriebehauptwelle 340 gelagert und zum kuppelnden Eingriff mit dem Kickerkupplungsteil 240 entlang dieser axial verschiebbar. Um den Verbrennungsmotor des Motorrads zu starten, lässt sich das mit der mechanischen Kickstart-Anlassvorrichtung 200 erzeugte Drehmoment über das Kickerzahnrad 220 an das Kickerritzel übertragen, indem das Kickerritzel entlang der Getriebehauptwelle 340 in Eingriff mit der stirnseitigen Verzahnung des Kickerzahnrads 220 versetzt wird. Hierbei geraten außerdem die Querverzahnung des Kickerritzels sowie die Querverzahnung 241 des Kickerkupplungsteils 240 in gegenseitigen Eingriff. Die komplementären Querverzahnungen sind so ausgebildet, dass in Anlass- und Antriebsdrehrichtung x der Getriebehauptwelle 340 ein Drehmoment bzw. eine Drehbewegung von dem Kickerritzel auf das Kickerkupplungsteil 240 übertragbar ist, wohingegen aufgrund der schräg ausgebildeten Zahnflächen andersherum, von dem Kickerkupplungsteil 240 auf das Kickerritzel, ein Freilauf realisiert ist. Auf diese Weise lässt sich ein Mitdrehen des Kickstartpedals nach erfolgtem Startvorgang in Anlass- und Antriebsdrehrichtung x vermeiden. Die Querverzahnung 241 ermöglicht aber auch das Kickstartpedal nach dem Startvorgang in der entgegengesetzten Rücklaufrichtung y wieder in seine Ausgangsposition zurück stellen zu können. Während des Normalbetriebs des Motorrads, d.h. bei laufendem Verbrennungsmotor, steht das Kickerritzel weder mit dem Kickerkupplungsteil 240 noch mit dem Kickerzahnrad 120 in Eingriff und ist axial entlang der Getriebehauptwelle 340 nach "hinten" versetzt.

Zusammengefasst können zum Starten des Verbrennungsmotors sowohl das elektrische Startersystem 100 als auch die mechanische Kickstart-Anlassvorrichtung 200 am Kickerkupplungsteil 240 angreifen, wobei das Drehmoment des elektrischen Startermotors 110 stirnseitig, und das Drehmoment der mechanischen Kickstart-Anlassvorrichtung 200 axial an das Kickerkupplungsteil 240 übertragbar ist. Die Drehmomentübertragung ist dabei jeweils mit einem Freilauf, in Form der Starterfreilaufvorrichtung 140 bzw. der Ratschenverbindung zwischen der Querverzahnung 241 des Kickerkupplungsteils 240 und der Querverzahnung des Kickerritzels versehen. Auf diese Weise kann das elektrische Startersystem 100 besonders bauraumsparend und mit nur minimalen Modifikationen in die mechanische Kickstart-Anlassvorrichtung 200 integriert werden, wobei die Funktionsfähigkeit der Kickstart-Anlassvorrichtung 200 vollständig erhalten bleibt.

Schließlich ist in der Figur 6 eine schematisch perspektivische Explosionsdarstellung einer beispielhaften Ausführungsform eines erfindungsgemäßen elektrischen Startersatzes 100a mit montierter Abdeckung 250 der Kickstart-Anlassvorrichtung 200 gezeigt. Der elektrische Startersatz 100a umfasst den elektrischen Startermotor 110, ein erstes Starterverbindungsstück 131 und ein zweites Starterverbindungsstück 132, eine Adapterplatte 150, ein Startergetriebe 120 sowie ein Kickerkupplungsteil 240 mit einer Starterfreilaufvorrichtung 140, die stirnseitig mit einem Starterzahnkranz 123 versehen ist. Gemeinsam mit dem Befestigungsabschnitt 153 der Adapterplatte 150 bilden das erste Starterverbindungsstück 131 und das zweite Starterverbindungsstück 132 das Startergetriebegehäuse 130, innerhalb dessen das Startergetriebe 120 aufgenommen ist. Das Startergetriebe 120 weist das Starterritzel 121 und das Starterzahnrad 122 auf, wobei letzteres stirnseitig in den Starterzahnkranz 123 eingreift. Das Starterritzel 121 ist als Doppelzahnrad ausgebildet und greift am gegenüberliegenden Wellenende in ein Ritzel 124 ein, welches Bestandteil eines weiteren Doppelzahnrads ist. Das auf derselben Welle angeordnete Zahnrad 125 greift schließlich in das Starterwellenritzel 112 des elektrischen Startermotors 110 ein. Durch das Startergetriebe 120 wird somit das am Starterwellenritzel 112 abgreifbare Drehmoment über mehrere Übersetzungsstufen und Ebenen, vorzugsweise vier Übersetzungsstufen und drei Ebenen an das Kickerkupplungsteil 240 mittels dessen Starterzahnkranz 123 weitergegeben.

Vorzugsweise sind der elektrische Startermotor 110, das Startergetriebegehäuse 130 mit dem darin enthaltenen Startergetriebe 120 und das Kickerkupplungsteil 240 mit Starterfreilaufvorrichtung 140 zusammen mit der Adapterplatte 150 bereits vormontiert, sodass zum Nachrüsten eines Motorrads mit mechanischer Kickstart-Anlassvorrichtung 200 lediglich deren Abdeckung 250 abzunehmen ist und die Adapterplatte 150 mit den entsprechend vormontierten Bauteilen des elektrischen Startersatzes 100a zwischen der Abdeckung 250 und dem Getriebegehäuse 310 zu befestigen ist. Zur Befestigung können dem elektrischen Startersatz 100a optional verlängerte Befestigungsmittel 251a beigefügt sein, um den aufgrund der Adapterplatte 150 vergrößerten Abstand zwischen Abdeckung 250 und Getriebegehäuse 310 auszugleichen. Ebenfalls optional kann der elektrische Startersatz 110a zusätzlich eine verlängerte Kickerwelle 210 und/oder eine verlängerte Bremswelle und/oder einen verlängerten Getriebekupplungsbetätigungshebel 350 und/oder eine verlängerte Kupplungsdruckstange 360 jeweils zum bedarfs- und/oder wahlweisen Austausch mit den entsprechenden Originalbauteilen des Motorrads aufweisen.

Insgesamt lässt sich der elektrische Startersatz 100a einfach und unkompliziert, ohne dass spezielle Fachkenntnisse oder besonderes Werkzeug erforderlich sind, nachrüsten. Die vorzunehmenden Modifikationen an den Originalbauteilen sind minimal und optisch nahezu nicht wahrnehmbar, die Funktion der mechanischen Kickstart-Anlassvorrichtung 200 bleibt vollumfänglich erhalten. Vorzugsweise ist lediglich das Original-Kickerkupplungsteil durch das die Starterfreilaufvorrichtung 140 und den Starterzahnkranz 123 aufweisende Kickerkupplungsteil 240 zu ersetzen. Je nach Bauart kann es ggf. auch erforderlich sein die Kickerwelle 210 und/oder die Bremswelle und/oder den Getriebekupplungsbetätigungshebel 350 und/oder die Kupplungsdruckstange 360 auszutauschen.

### Bezugszeichenliste

- 100: elektrisches Startersystem
- 100a: elektrischer Startersatz
- 110: elektrischer Startermotor
- 112: Starterwellenritzel
- 120: Startergetriebe
- 121: Starterritzel
- 122: Starterzahnrad
- 123: Starterzahnkranz
- 124: Ritzel
- 125: Zahnrad
- 130: Startergetriebegehäuse
- 131: erstes Starterverbindungsstück
- 132: zweites Starterverbindungsstück
- 140: Starterfreilaufvorrichtung
- 141: radial äußerer Laufring
- 142: radial innerer Laufring
- 143: Wälzkörper
- 150: Adapterplatte
- 151: Ausnehmung
- 152: Aufnahmebereich
- 153: Befestigungsabschnitt
- 154: Schrauben
- 200: mechanische Kickstart-Anlassvorrichtung
- 210: Kickerwelle
- 211: Pedalanschluss
- 212: Federsitz
- 220: Kickerzahnrad
- 221: Anschlagbolzen
- 240: Kickerkupplungsteil
- 241: Querverzahnung
- 250: Abdeckung
- 251: Befestigungsmittel
- 251a: verlängerte Befestigungsmittel
- 300: Getriebe
- 310: Getriebegehäuse
- 320: Adapterabschnitt
- 330: Getriebegrundplatte
- 340: Getriebehauptwelle
- 350: Getriebekupplungsbetätigungshebel
- 360: Kupplungsdruckstange
- x: Anlass- und Antriebsdrehrichtung
- y: Rücklaufrichtung

## Patentansprüche

1. Elektrisches Startersystem (100) für ein Motorrad mit mechanischer Kickstart-Anlassvorrichtung (200), wobei das Motorrad eine Getriebehauptwelle (340) aufweist, die zum Starten des Motorrads und während des Normalbetriebs des Motorrads in einer Anlass- und Antriebsdrehrichtung (x) dreht und die Kickstart-Anlassvorrichtung (200) ein Kickerritzel sowie ein Kickerkupplungsteil (240) aufweist, wobei das Kickerritzel zur axialen Kupplung mit dem Kickerkupplungsteil (240) ausgebildet ist und das Kickerkupplungsteil (240) drehmomentübertragend mit der Getriebehauptwelle (340) verbunden ist, und wobei das elektrische Startersystem (100) einen elektrischen Startermotor (110) mit einem davon antreibbaren Starterwellenritzel (112) umfasst,
**dadurch gekennzeichnet, dass**
ein Drehmoment des elektrischen Startermotors (110) über ein zwischengeschaltetes Startergetriebe (120), von dem Starterwellenritzel (112) an das Kickerkupplungsteil (240) übertragbar ist, wobei das elektrische Startersystem (100) einen Starterzahnkranz (123) aufweist, der das Kickerkupplungsteil (240) koaxial zum drehmomentübertragenden Eingriff mit einem Starterzahnrad (122) des Startergetriebes (120) oder mit dem Starterwellenritzel (112) des elektrischen Startermotors (100) umgibt, und wobei das elektrische Startersystem (100) eine Adapterplatte (150) aufweist, die zur Verbindung des elektrischen Startermotors (110) mit einem Getriebegehäuse (310) des Motorrads ausgebildet ist.

2. Elektrisches Startersystem (100) nach Anspruch 1,
**dadurch gekennzeichnet, dass**
der elektrische Startermotor (110) achsparallel zur Getriebehauptwelle (340) angeordnet ist und dessen Drehmoment über eine oder mehrere Stufen des zwischengeschalteten Startergetriebes (120), des elektrischen Startersystems (100) an das mit der Getriebehauptwelle (340) drehmomentübertragend verbundene Kickerkupplungsteil (240) übertragbar ist.

3. Elektrisches Startersystem (100) nach Anspruch 1 oder 2,
**dadurch gekennzeichnet, dass**
das Startergetriebe (120ein Stirnradgetriebe ist, wobei das Drehmoment des elektrischen Startermotors (110) stirnseitig an das Kickerkupplungsteil (240) übertragbar ist.

4. Elektrisches Startersystem (100) nach einem der vorhergehenden Ansprüche,
**dadurch gekennzeichnet, dass**
das elektrische Startersystem (100) eine Starterfreilaufvorrichtung (140) aufweist, die dem elektrischen Startermotor (110), insbesondere dem Starterwellenritzel (112) und dem Kickerkupplungsteil (240) zwischengeschaltet ist, sodass in der Anlass- und Antriebsdrehrichtung (x) der Getriebehauptwelle (340) ausgehend von dem elektrischen Startermotor (110) zu dem Kickerkupplungsteil (240) eine drehmomentübertragende Kopplung ausgebildet ist und ausgehend von dem Kickerkupplungsteil (240) zu dem elektrischen Startermotor (110) eine freilaufende Kopplung ausgebildet ist.

5. Elektrisches Startersystem (100) nach Anspruch 4,
**dadurch gekennzeichnet, dass**
die Starterfreilaufvorrichtung (140) in der Art eines Klemmkörper- oder Klemmrollenfreilaufs, insbesondere eines Wälzlagerfreilaufs, ausgeführt ist und das Kickerkupplungsteil (240) koaxial umgibt, wobei insbesondere in einer der Anlass- und Antriebsdrehrichtung (x) entgegengesetzten Rücklaufrichtung (y) eine Drehbewegung der Getriebehauptwelle (340) gesperrt ist.

6. Elektrisches Startersystem (100) nach Anspruch 5,
**dadurch gekennzeichnet, dass**
die als Klemmkörper- oder Klemmrollenfreilauf, insbesondere als Wälzlagerfreilauf, ausgebildete Starterfreilaufvorrichtung (140) einen radial äußeren Laufring (141) und einen radial inneren Laufring (142) aufweist, wobei der radial äußere Laufring (141) drehmomentübertragend mit dem Starterzahnkranz (123) des elektrischen Startersystems (100) und der radial innere Laufring (142) drehmomentübertragend mit dem Kickerkupplungsteil (240) der Kickstart-Anlassvorrichtung (200) verbunden ist.

7. Elektrisches Startersystem (100) nach einem der vorhergehenden Ansprüche,
**dadurch gekennzeichnet, dass**
die Adapterplatte (150) zwischen einer Abdeckung (250) der Kickstart-Anlassvorrichtung (200) und einem Getriebegehäuse (310) des Motorrads angeordnet ist und der elektrische Startermotor (110) mittels der Adapterplatte (150) an dem Getriebegehäuse (310) des Motorrads befestigt ist.

8. Elektrisches Startersystem (100) nach Anspruch 7,
**dadurch gekennzeichnet, dass**
die Adapterplatte (150) einen Aufnahmebereich (152) zur Aufnahme der Starterfreilaufvorrichtung (140) und/oder zur Aufnahme des Starterzahnkranzes (123) aufweist und/oder ausbildet.

9. Elektrisches Startersystem (100) nach einem der vorhergehenden Ansprüche,
**dadurch gekennzeichnet, dass**
das elektrische Startersystem (100) eine Kickerwelle (210) mit abnehmbarem Federsitz (212) zur Aufnahme einer Kickstart-Feder aufweist, wobei die Kickerwelle (210) zur drehmomentübertragenden Verbindung mit einem Kickerzahnrad (220) ausgebildet ist.

10. Elektrischer Startersatz (100a) zum Nachrüsten eines Motorrads mit mechanischer Kickstart-Anlassvorrichtung (200), wobei das Motorrad eine Getriebehauptwelle (340) aufweist, die zum Starten des Motorrads und während des Normalbetriebs des Motorrads in einer Anlass- und Antriebsdrehrichtung (x) dreht, der elektrische Startersatz (100a) umfassend,
- einen elektrischen Startermotor (110) mit einem davon antreibbaren Starterwellenritzel (112),
- ein Kickerkupplungsteil (240) mit Starterfreilaufvorrichtung (140), wobei das Kickerkupplungsteil (240) zur drehmomentübertragenden Verbindung mit der Getriebehauptwelle (340) ausgebildet ist und die Starterfreilaufvorrichtung (140) zur, insbesondere stirnseitigen, Kopplung des Kickerkupplungsteils (240) mit dem Starterwellenritzel (112) ausgebildet ist, und
- eine Adapterplatte (150), die zur Verbindung des elektrischen Startermotors (110) mit einem Getriebegehäuse (310) des Motorrads und zur Aufnahme des koaxial von einem Starterzahnkranz (123) umgebenen Kickerkupplungsteils (240) mit Starterfreilaufvorrichtung (140) ausgebildet ist.

11. Elektrischer Startersatz (1 00a) nach Anspruch 10,
**dadurch gekennzeichnet, dass**
der elektrische Startersatz (100a) vormontiert ist, wobei die Adapterplatte (150), insbesondere über ein oder mehrere Starterverbindungsstücke (131, 132), mit dem elektrischen Startermotor (110), vorzugsweise lösbar, verbunden ist und/oder das Kickerkupplungsteil (240) mit Starterfreilaufvorrichtung (140) innerhalb eines hierzu ausgebildeten Aufnahmebereichs (152) der Adapterplatte (150) angeordnet ist.

12. Elektrischer Startersatz (1 00a) nach einem der Ansprüche 10 oder 11,
**dadurch gekennzeichnet, dass**
der elektrische Startersatz (100a) ein Starterzahnrad (122) und einen Starterzahnkranz (123) umfasst, wobei der Starterzahnkranz (123) das Kickerkupplungsteil (240) und die Starterfreilaufvorrichtung (140) koaxial umgebend angeordnet ist und das Starterzahnrad (122) als Bestandteil eines Startergetriebes (120) zur Kopplung mit dem Starterwellenritzel (112) des elektrischen Startermotors (110) und zum Eingriff in den Starterzahnkranz (123) ausgebildet und anordenbar ist.

13. Elektrischer Startersatz (1 00a) nach einem der Ansprüche 10 bis 12,
**dadurch gekennzeichnet, dass**
der elektrische Startersatz (110a) eine Kickerwelle (210) mit abnehmbarem Federsitz (212) umfasst, wobei die Kickerwelle (210) zur drehmomentübertragenden Verbindung mit einem Kickerzahnrad (220) der Kickstart-Anlassvorrichtung (200) ausgebildet ist.

14. Elektrischer Startersatz (1 00a) nach einem der Ansprüche 10 bis 13,
**dadurch gekennzeichnet, dass**
der elektrische Startersatz (100a) eine Kickerwelle (210) und/oder eine Bremswelle und/oder einen Getriebekupplungsbetätigungshebel (350) und/oder eine Kupplungsdruckstange (360) jeweils zum bedarfs- und/oder wahlweisen Austausch mit den entsprechenden Originalbauteilen des Motorrads aufweist.

15. Motorrad, ausgerüstet, nachgerüstet oder versehen mit einem elektrischen Startersystem (100) nach einem der Ansprüche 1 bis 9 oder einem elektrischen Startersatz (100a) nach einem der Ansprüche 10 bis 14.

## Claims

1. Electric starter system (100) for a motorcycle, with a mechanical kickstart starter device (200), wherein the motorcycle has a main gear shaft (340), which, for starting the motorcycle and during the normal operation of the motorcycle, rotates in a starting and drive direction of rotation (x), and the kickstart starter device (200) comprises a kicker pinion and a kicker coupling part (240), wherein the kicker pinion is configured for axial coupling with the kicker coupling part (240), and the kicker coupling part (240) is connected to the main gear shaft (340) such as to transfer torque, and wherein the Electric starter system (100) comprises an Electric starter motor (110), with a starter shaft pinion (112) which can be driven by the said motor,
**characterized in that**
a torque force of the Electric starter motor (110) can be transferred via an intermediate starter gear (120) connected in between in the circuit, from the starter shaft pinion (112) to the kicker coupling part (240), wherein the Electric starter system (100) comprises a starter toothed rim (123), which surrounds the kicker coupling part (240) coaxially in order to transfer the torque to a starter toothed wheel (122) of the starter gear (120) or to the starter shaft pinion (112) of the Electric starter motor (100), and wherein the Electric starter system (100) comprises an adapter plate (150), which is configured such as to connect the Electric starter motor (110) to a gearbox (310) of the motorcycle.

2. Electric starter system (100) according to claim 1,
**characterized in that**
the Electric starter motor (110) is arranged axis-parallel to the main gear shaft (340), and its torque can be transferred via one or more steps of the intermediate starter gear (120) of Electric starter system (100) to the kicker coupling part (240), which is connected to the gear main shaft (340) in a torque transferring manner.

3. Electric starter system (100) according to claim 1 or 2,
**characterized in that**
the starter gear (120) is a spur gear, wherein the torque from the Electric starter motor (110) can be transferred on the front face side to the kicker coupling part (240).

4. Electric starter system (100) according to any one of the preceding claims,
**characterized in that**
the Electric starter system (100) comprises a starter freewheeling device (140), which is arranged in the circuit between the Electric starter motor (110), in particular the starter shaft pinion (112) and the kicker coupling part (240), such that, in the starting and drive direction of rotation (x) of the gear main shaft (340), starting from the Electric starter motor (110) to the kicker coupling part (240), a torque-transfer coupling arrangement is formed, and a freewheeling coupling is formed starting from the kicker coupling part (240) to the Electric starter motor (110).

5. Electric starter system (100) according to claim 4,
**characterized in that**
the starter freewheeling device (140) is configured in the form of a clamping body or clamping roller freewheeling device, in particular a roller bearing freewheeling device, and surrounds the kicker coupling part (240) coaxially, wherein, in particular, a rotational movement is blocked of the gear main shaft (340) in a return direction (y) opposed to the starting and drive direction of rotation (x).

6. Electric starter system (100) according to claim 5,
**characterized in that**
the starter freewheeling device (140), configured as a clamping body freewheeling device or clamping roller freewheeling device, comprises a radial outer running ring (141) and a radial inner running ring (142), wherein the radial outer running ring (141) is connected in a torque-transferring manner to the starter toothed wheel (123) of the Electric starter system (100), and the radial inner running ring (142) is connected in a torque-transferring manner to the kicker coupling part (240) of the kickstart starter device (200).

7. Electric starter system (100) according to any one of the preceding claims,
**characterized in that**
the adapter plate (150) is arranged between a cover (250) of the kickstart starter device (200) and a gearbox (310) of the motorcycle, and the electric starter motor (110) is secured by the adapter plate (150) to the gearbox (310) of the motorcycle.

8. Electric starter system (100) according to claim 7,
**characterized in that**
the adapter plate (150) comprises and/or forms a receiving region (152) for receiving the starter freewheeling device (140) and/or for receiving the starter toothed wheel (123).

9. Electric starter system (100) according to any one of the preceding claims,
**characterized in that**
the electric starter system (100) comprises a kicker shaft (210) with a removable spring seat (212) for receiving a kickstart spring, wherein the kicker shaft (210) is configured in a torque-transfer connection to a kicker toothed wheel (220).

10. Electric starter set (100a) for retrofitting a motorcycle with a mechanical kickstart starter device (200), wherein the motorcycle has a main gear shaft (340), which for starting the motorcycle and during the normal operation of the motorcycle rotates in a start and drive direction of rotation (x), the electric starter set (100a) comprising:
- an electric starter motor (110) with a starter shaft pinion (112) which can be driven by the motor,
- a kicker coupling part (240) with a starter freewheeling device (140), wherein the kicker coupling part (240) is configured in a torque-transfer connection to the gear main shaft (340), and the starter freewheel device (140) is configured, in particular on the front face side, for coupling the kicker coupling part (240) to the starter shaft pinion (112), and
- an adapter plate (150), which is configured for connecting the Electric starter motor (110) to a gearbox (310) of the motorcycle, and for receiving the kicker coupling part (240), surrounded coaxially by a starter toothed wheel (123), with the starter freewheeling device (140).

11. Electric starter set (100a) according to claim 10,
**characterized in that**
the Electric starter set (100a) is pre-fitted, wherein the adapter plate (150) is connected, in particular by means of one or more starter connecting parts (131, 132), to the Electric starter motor (110), preferably in a detachable manner, and/or the kicker coupling part (240) with the starter freewheeling device (140) is arranged inside a receiving region (152) of the adapter plate (150), configured for this purpose.

12. Electric starter set (100a) according to any one of claims 10 or 11,
**characterized in that**
the electric starter set (100a) comprises a starter toothed wheel (122) and a starter toothed pinion (123), wherein the starter toothed pinion (123) is arranged surrounding coaxially the kicker coupling part (240) and the starter freewheeling device (140), and the starter toothed wheel (122) is configured and can be arranged as a component part of a starter gear (120) for coupling to the starter shaft pinion (112) of the electric starter motor (110), and for engaging into the starter toothed pinion (123).

13. Electric starter set (100a) according to any one of claims 10 to 12,
**characterized in that**
the electric starter set (110a) comprises a kicker shaft (210) with a removable spring seat (212), wherein the kicker shaft (210) is configured for a torque-transferring connection to a kicker toothed wheel (220) of the kickstart starter device (200)

14. Electric starter set (100a) according to any one of claims 10 to 13,
**characterized in that**
the electric starter set (100a) comprises a kicker shaft (210) and/or a brake shaft and/or a gear coupling or clutch actuating lever (350) and/or a clutch pressure rod (360), in each case for the replacement as required or desired with the corresponding original components of the motorcycle.

15. Motorcycle, equipped, retrofitted, or provided with an electric starter system (100) according to any one of claims 1 to 9, or an electrical starter set (100a) according to any one of claims 10 to 14.

## Revendications

1. Système de démarreur électrique (100) pour une motocyclette pourvue d'un dispositif de démarrage au pied (200) mécanique, la motocyclette possédant un arbre principal de boîte de vitesses (340) qui, pour le démarrage de la motocyclette et pendant le fonctionnement normal de la motocyclette, tourne dans un sens de rotation de démarrage et d'entraînement (x) et le dispositif de démarrage au pied (200) comprenant un pignon de levier de démarrage au pied ainsi qu'une partie d'accouplement de levier de démarrage au pied (240), le pignon de levier de démarrage au pied étant configuré pour un accouplement axial avec la partie d'accouplement de levier de démarrage au pied (240) et la partie d'accouplement de levier de démarrage au pied (240) étant reliée à l'arbre principal de boîte de vitesses (340) avec transmission de couple, et le système de démarreur électrique (100) comportant un moteur de démarreur électrique (110) pourvu d'un pignon d'arbre de démarreur (112) pouvant être entraîné par celui-ci,
**caractérisé en ce que**
un couple de rotation du moteur de démarreur électrique (110) peut être transmis du pignon d'arbre de démarreur (112) à la partie d'accouplement de levier de démarrage au pied (240) par le biais d'un engrenage de démarreur (120) interposé, le système de démarreur électrique (100) possédant une couronne dentée de démarreur (123), qui entoure la partie d'accouplement de levier de démarrage au pied (240) de manière coaxiale en vue d'une prise avec transmission de couple avec une roue dentée de démarreur (122) de l'engrenage de démarreur (120) ou avec le pignon d'arbre de démarreur (112) du moteur de démarreur électrique (100), et le système de démarreur électrique (100) possédant une plaque d'adaptation (150) qui est configurée pour relier le moteur de démarreur électrique (110) à un carter de boîte de vitesses (310) de la motocyclette.

2. Système de démarreur électrique (100) selon la revendication 1,
**caractérisé en ce que**
le moteur de démarreur électrique (110) est disposé parallèlement à l'axe de l'arbre principal de boîte de vitesses (340) et son couple peut être transmis par le biais d'un ou plusieurs rapports de l'engrenage de démarreur (120) interposé, du système de démarreur électrique (100) à la partie d'accouplement de levier de démarrage au pied (240) reliée à l'arbre principal de boîte de vitesses (340) avec transmission du couple.

3. Système de démarreur électrique (100) selon la revendication 1 ou 2,
**caractérisé en ce que**
l'engrenage de démarreur (120) est un engrenage droit, le couple du moteur de démarreur électrique (110) pouvant être transmis à la partie d'accouplement de levier de démarrage au pied (240) du côté frontal.

4. Système de démarreur électrique (100) selon l'une des revendications précédentes,
**caractérisé en ce que**
le système de démarreur électrique (100) possède un dispositif de roue libre de démarreur (140) qui est interposé entre le moteur de démarreur électrique (110), notamment entre le pignon d'arbre de démarreur (112) et la partie d'accouplement de levier de démarrage au pied (240), de sorte que, dans le sens de rotation de démarrage et d'entraînement (x) de l'arbre principal de boîte de vitesses (340), un accouplement avec transmission du couple est formé en partant du moteur de démarreur électrique (110) vers la partie d'accouplement de levier de démarrage au pied (240), et un accouplement à roue libre est formé en partant de la partie d'accouplement de levier de démarrage au pied (240) vers le moteur de démarreur électrique (110).

5. Système de démarreur électrique (100) selon la revendication 4,
**caractérisé en ce que**
le dispositif de roue libre de démarreur (140) est réalisé sous la forme d'une roue libre à corps de blocage ou à rouleaux de blocage, notamment d'une roue libre à palier à roulement, et entoure de manière coaxiale la partie d'accouplement de levier de démarrage au pied (240), un mouvement de rotation de l'arbre principal de boîte de vitesses (340) étant bloqué, notamment dans un sens de retour (y) opposé au sens de rotation de démarrage et d'entraînement (x).

6. Système de démarreur électrique (100) selon la revendication 5,
**caractérisé en ce que**
le dispositif de roue libre de démarreur (140) réalisé sous la forme d'une roue libre à corps de blocage ou à rouleaux de blocage, notamment d'une roue libre à palier à roulement, possède une bague de roulement radialement externe (141) et une bague de roulement radialement interne (142), la bague de roulement radialement externe (141) étant reliée avec transmission du couple à la couronne dentée de démarreur (123) du système de démarreur électrique (100) et la bague de roulement radialement interne (142) avec transmission du couple à la partie d'accouplement de levier de démarrage au pied (240) du dispositif de démarrage au pied (200).

7. Système de démarreur électrique (100) selon l'une des revendications précédentes,
**caractérisé en ce que**
la plaque d'adaptation (150) est disposée entre un couvercle (250) du dispositif de démarrage au pied (200) et un carter de boîte de vitesses (310) de la motocyclette, et le moteur de démarreur électrique (110) est fixé au carter de boîte de vitesses (310) de la motocyclette au moyen de la plaque d'adaptation (150).

8. Système de démarreur électrique (100) selon la revendication 7,
**caractérisé en ce que**
la plaque d'adaptation (150) possède et/ou forme une zone d'accueil (152) destinée à recevoir le dispositif de roue libre de démarreur (140) et/ou destinée à recevoir la couronne dentée de démarreur (123).

9. Système de démarreur électrique (100) selon l'une des revendications précédentes,
**caractérisé en ce que**
le système de démarreur électrique (100) possède un arbre de levier de démarrage au pied (210) comprenant un siège de ressort (212) amovible destiné à recevoir un ressort de démarrage au pied, l'arbre de levier de démarrage au pied (210) étant configuré pour une liaison avec transmission de couple avec une roue dentée de levier de démarrage au pied (220).

10. Kit de démarreur électrique (100a) destiné à la mise à niveau d'une motocyclette comprenant un dispositif de démarrage au pied (200) mécanique, la motocyclette possédant un arbre principal de boîte de vitesses (340) qui tourne dans un sens de rotation de démarrage et d'entraînement (x) pour démarrer la motocyclette et pendant le fonctionnement normal de la motocyclette, le kit de démarreur électrique (100a) comprenant,
- un moteur de démarreur électrique (110) pourvu d'un pignon d'arbre de démarreur (112),
- une partie d'accouplement de levier de démarrage au pied (240) pourvue d'un dispositif de roue libre de démarreur (140), la partie d'accouplement de levier de démarrage au pied (240) étant configurée pour une liaison avec transmission de couple avec l'arbre principal de boîte de vitesses (340) et le dispositif de roue libre de démarreur (140) étant configuré pour l'accouplement, notamment du côté frontal, de la partie d'accouplement de levier de démarrage au pied (240) avec le pignon d'arbre de démarreur (112), et
- une plaque d'adaptation (150), qui est configurée pour la liaison du moteur de démarreur électrique (110) avec un carter de boîte de vitesses (310) de la motocyclette et pour recevoir la partie d'accouplement de levier de démarrage au pied (240) pourvue du dispositif de roue libre de démarreur (140) entourée de manière coaxiale par une couronne dentée de démarreur (123) .

11. Kit de démarreur électrique (100a) selon la revendication 10,
**caractérisé en ce que**
le kit de démarreur électrique (100a) est prémonté, la plaque d'adaptation (150) étant reliée au moteur de démarreur électrique (110), de préférence de manière amovible, notamment par le biais d'une ou plusieurs pièces de liaison de démarreur (131, 132), et/ou la partie d'accouplement de levier de démarrage au pied (240) pourvue du dispositif de roue libre de démarreur (140) est disposée à l'intérieur d'une zone d'accueil (152) configurée à cet effet de la plaque d'adaptation (150) .

12. Kit de démarreur électrique (100a) selon la revendication 10 ou 11,
**caractérisé en ce que**
le kit de démarreur électrique (100a) comporte une roue dentée de démarreur (122) et une couronne dentée de démarreur (123) la couronne dentée de démarreur (123) étant disposée de façon à entourer de manière coaxiale la partie d'accouplement de levier de démarrage au pied (240) et le dispositif de roue libre de démarreur (140) et la roue dentée de démarreur (122), en tant qu'élément constitutif d'un engrenage de démarreur (120), étant configurée ou pouvant être disposée pour l'accouplement avec le pignon d'arbre de démarreur (112) du moteur de démarreur électrique (110) et pour venir en prise dans la couronne dentée de démarreur (123).

13. Kit de démarreur électrique (100a) selon l'une des revendications 10 à 12,
**caractérisé en ce que**
le kit de démarreur électrique (110a) comporte un arbre de levier de démarrage au pied (210) comprenant un siège de ressort (212) amovible, l'arbre de levier de démarrage au pied (210) étant configuré pour une liaison avec transmission de couple avec une roue dentée de levier de démarrage au pied (220) du dispositif de démarrage au pied (200).

14. Kit de démarreur électrique (100a) selon l'une des revendications 10 à 13,
**caractérisé en ce que**
le kit de démarreur électrique (100a) possède un arbre de levier de démarrage au pied (210) et/ou un arbre de frein et/ou un levier d'actionnement d'embrayage de boîte de vitesses (350) et/ou une tige de pression d'embrayage (360), respectivement destinés à un remplacement en cas de besoin et/ou facultatif par les composants d'origine correspondants de la motocyclette.

15. Motocyclette équipée de, mise à niveau avec ou pourvue d'un système de démarreur électrique (100) selon l'une des revendications 1 à 9 ou d'un kit de démarreur électrique (100a) selon l'une des revendications 10 à 14.
